# EUROPÄISCHE PATENTANMELDUNG

(11) **EP 0 824 107 A2**
(43) Veröffentlichungstag der Anmeldung: **18.02.1998**
(21) Anmeldenummer: 97113615.5
(22) Anmeldetag: 07.08.1997
(51) Int. Cl.: C08B 15/00, C08B 16/00, C08L 1/02

(54) **Cellulosepartikel**

(30) Priorität: 12.08.1996 AT 1451/96
(71) Anmelder: LENZING AKTIENGESELLSCHAFT, 4860 Lenzing (AT)
(72) Erfinder: Schlangen, Jörg, 4840 Vöcklabruck (DE)

(57) **Zusammenfassung**

Die Erfindung betrifft Cellulosepartikel, welche im wesentlichen gleichmäßig über den Querschnitt verteilte kationische und/oder anionische Gruppen enthalten. Die kationische und/oder anionische Gruppen enthaltenden Cellulosepartikel sind dadurch gekennzeichnet, daß die Partikel einen Feuchtigkeitsgehalt von weniger als 30 Masse-%, vorzugsweise weniger als 20 Masse-% aufweisen, die Partikel eine durchschnittliche Partikelgröße von weniger als 300 µm aufweisen und daß zumindest 90 Masse-% der Partikel in ihrer Partikelgröße um weniger als 60 µm von der durchschnittlichen Partikelgröße abweichen. Die Erfindung betrifft weiters ein Verfahren zur Herstellung dieser Cellulosepartikel, welches dadurch gekennzeichnet ist, daß die feuchten kationische und/oder anionische Gruppen enthaltenden Cellulosepartikel zur Zerkleinerung einer Mahltrocknung unterworfen werden.

## Beschreibung

Die Erfindung betrifft Cellulosepartikel gemäß dem Oberbegriff des Anspruches 1 sowie ein Verfahren zur Herstellung solcher Cellulosepartikel.

Es ist bekannt, kationische bzw. ionische Gruppen aufweisende Cellulosepartikel dadurch herzustellen, daß man Lösungen der Cellulose oder von Derivaten der Cellulose, insbesondere alkalischen Lösungen des Cellulosexanthogenates (Viskose) kationische oder anionische Polymere zusetzt und aus der Lösung mittels bekannter Verfahren das Cellulosexanthogenat ausfällt und die Cellulose regeneriert. Solcherart hergestellte, kationische oder anionische bzw. auch gemischt kationisch-anionische Gruppen aufweisende Cellulosepartikel sind z.B. in den JP-A 2-274738, JP-A 52-26561, JP-A 3-54234 und JP-A 61-258801 beschrieben.

Es ist bekannt, daß solche Cellulosepartikel, insbesondere kationische Cellulosepartikel in Faserform eine verbesserte Anfärbbarkeit in bezug auf Säurefarbstoffe aufweisen. Weiters ist z.B. aus der JP-A 3-54234 bekannt, daß sich solcherart hergestellte Cellulosepartikel als Ionenaustauscher, zum Entfernen von Metallen aus Lösungen sowie als Flockungsmittel eignen.

In der PCT-WO 96/26220 wird beschrieben, daß durch die Zugabe eines Kationisierungsmittel zur Viskose Cellulosepartikel geschaffen werden, die über ihren gesamten Querschnitt verteilt an die Cellulose gebundene kationische Gruppen enthalten. Es wird weiters beschrieben, daß sich die Kationizität solcher Partikel bei einer Mahlung erhöht.

Beispielsweise wird beschrieben, daß zur Zerkleinerung der Partikel eine Refinernaßmahlung eines wässerigen Slurrys der Partikel durchgeführt werden kann.

Die in der JP-A 3-54234 beschriebenen kationisierten Cellulosepartikel werden zunächst in Faserform gewonnen und dann in 10-mm-Stückchen geschnitten. In diesem Dokument ist auch beschrieben, daß durch Zugabe eines anionischen Polymers zur Viskose zusätzliche anionische Gruppen aufweisende Cellulosepartikel erhalten werden. Auch diese Partikel werden zunächst in Faserform ausgefällt und dann z.B. in Teilchen von 0,1 mm Größe zerschnitten.

Die bekannten kationische und/oder anionische Gruppen aufweisenden Cellulosepartikel lassen jedoch in bezug auf ihre Wirksamkeit als auch auf ihre Handhabbarkeit beim Transport und Einsatz für verschiedene Anwendungszwecke noch zu wünschen übrig oder sind aufgrund sehr aufwendiger Herstellungsverfahren nicht wirtschaftlich.

Aufgabe der vorliegenden Erfindung ist es demgemäß, kationische und/oder anionische Gruppen aufweisende Cellulosepartikel mit einem bestimmten Eigenschaftsspektrum zur Verfügung zu stellen, welche sich besonders gut für die verschiedenen Anwendungsmöglichkeiten kationischer bzw. anionischer Cellulosepartikel eignen und eine gute Handhabbarkeit beim Transport und Einsatz besitzen.

Diese Aufgabe wird durch Cellulosepartikel, welche über den gesamten Querschnitt verteilte kationische und/oder anionische Gruppen enthalten, und welche dadurch gekennzeichnet sind, daß
die Partikel einen Feuchtigkeitsgehalt von weniger als 30 Masse-%, vorzugsweise weniger als 20 Masse-% aufweisen,
die Partikel eine durchschnittliche Partikelgröße von weniger als 300 µm aufweisen und daß zumindest 90 Masse-% der Partikel in ihrer Partikelgröße um weniger als 60 µm von der durchschnittlichen Partikelgröße abweichen,
gelöst.

Es hat sich gezeigt, daß für die Eignung von kationischen und/oder anionischen Cellulosepartikeln für die angestrebten Anwendungen in wesentlichem Ausmaß nicht nur eine bestimmte Feinheit der Partikel, sondern auch eine enge Partikelgrößenverteilung notwendig ist. Die enge Partikelgrößenverteilung bewirkt nämlich, daß bei der Verwendung der erfindungsgemäßen Cellulosepartikel keine Klassierungseffekte auftreten. Beim Fördern der erfindungsgemäßen Cellulosepartikel kann es nicht zu Verstopfungen durch große, von der durchschnittlichen Partikelgröße stark abweichende Partikel kommen. Andererseits ist die Staubbildung durch ebenfalls von der durchschnittlichen Partikelgröße stark abweichende, sehr kleine Partikel minimiert. Ein solcherart homogenes Produkt bewirkt auch eine homogenere und verbesserte Wirkungsweise in den diversen Anwendungsgebieten.

Durch ein bloßes Zerschneiden von faserförmigen Cellulosepartikeln, wie aus dem Stand der Technik bekannt, kann weder die gewünschte enge Partikelgrößenverteilung noch die homogene Wirkungsweise der erfindungsgemäßen Cellulosepartikel erreicht werden.

Es ist weiters für die gute Handhabbarkeit und Transportierbarkeit der Cellulosepartikel von großer Bedeutung, daß diese im wesentlichen trocken, d.h mit einem Feuchtegehalt von weniger als 30 Masse-% vorliegen.

Besonders vorteilhaft erweist es sich, wenn die erfindungsgemäßen Cellulosepartikel eine durchschnittliche Partikelgröße von bis zu 100 µm, vorzugsweise 50 µm bis 100 µm aufweisen. Es hat sich gezeigt, daß sich in diesem Größenbereich einerseits eine hervorragende Wirkung der kationische und/oder anionische Gruppen aufweisenden Cellulosepartikel ergibt. Andererseits sind die erfindungsgemäßen Cellulosepartikel in diesem Bereich auch besonders gut handhabbar, da Staubemissionen und Klassierungseffekte der Cellulosepartikel bei Mischungen mit anderen Substanzen weiter minimiert werden können.

In diesem Größenbereich der erfindungsgemäßen Cellulosepartikel ist es besonders günstig, wenn 90 Masse-% der Partikel in ihrer Partikelgröße um weniger als 30 µm von der durchschnittlichen Partikelgröße abweichen.

Besonders vorteilhaft ist es, wenn die erfindungsgemäßen Cellulosepartikel als kationische Gruppen quartäre Ammoniumgruppen enthalten. Die kationischen Gruppen werden mittels dem der Viskose zugegebenen kationischen Polymer in die Cellulose eingeführt. Als kationisches Polymer sind dabei verschiedenste aus dem Stand der Technik zur Kationisierung von Polysacchariden bekannte kationische Substanzen verwendbar. Besonders bevorzugt sind Poly-diallyl-dialkyl-ammoniumchloride, z.B. Poly-diallyl-dimethyl-ammoniumchlorid (Poly-DADMAC). Die Menge des eingesetzten kationischen Polymers richtet sich dabei nach dem gewünschten Kationisierungsgrad der Cellulosepartikel.

Zur Herstellung der erfindungsgemäßen Cellulosepartikel eignet sich insbesondere ein Verfahren, welches die Schritte umfaßt:
- Versetzen und Vermischen einer Viskose mit einem kationischen und/oder anionischen Polymer
- Ausfällen der Viskose in einem oder mehreren wäßrigen Fäll- bzw. Regenerationsbädern
- Auswaschen der ausgefällten, regenerierten, kationische und/oder anionische Gruppen aufweisenden Cellulosepartikel
und welches dadurch gekennzeichnet ist, daß die mit einem Feuchtigkeitsgehalt von 75 Masse-% bis 90 Masse-% vorliegenden ausgewaschenen Cellulosepartikel einer Mahltrocknung unterworfen werden.

Es hat sich gezeigt, daß sich durch eine Mahltrocknung der in einer Suspension vorliegenden feuchten kationische und/oder anionische Gruppen aufweisenden Cellulosepartikel ein Zerkleinern der Cellulosepartikel auf vorteilhafte Partikelgrößen, unter Beibehaltung einer engen Partikelgrößenverteilung und unter gleichzeitiger Trocknung auf einen vorteilhaften Feuchtegehalt besonders günstig bewerkstelligen läßt.

Bei einer Mahltrocknung wird das zu zerkleinernde Gut gleichzeitig gemahlen und getrocknet. Da Cellulose bei zu starken Trocknungsbedingungen zur Verhornung neigt, was insbesondere im Falle von kationisierter oder anionisierter Cellulose zu einem Verlust der Wirksamkeit führt, war es für den Fachmann bislang eher üblich, feuchte kationische und/oder anionische Gruppen aufweisende Cellulosepartikel einer Naßmahlung zuzuführen, bei welcher der Feuchtegehalt der Partikel im wesentlichen nicht reduziert wird. Eine solche Naßmahlung kann z.B. mit Hilfe von Scheiben- oder Kegelrefinern erfolgen. Mit einer Naßmahlung ist es jedoch nicht möglich, kationische und/oder anionische Cellulosepartikel mit einem Feuchtegehalt von weniger als 30 Masse-% herzustellen, welche eine geringe durchschnittliche Partikelgröße als auch eine enge Partikelgrößenverteilung aufweisen. Weiters ist die anfallende Suspension bzw. Paste der zerkleinerten Cellulosepartikel nur mit relativ großem Aufwand transportierbar.

Es hat sich nun gezeigt, daß sich mit einer Mahltrocknung der feuchten kationische und/oder anionische Gruppen aufweisenden Cellulosepartikel eine Zerkleinerung der Cellulosepartikel auf günstige Bereiche erreichen läßt, ohne daß ein größerer Verhornungseffekt der Cellulosepartikel stattfindet. Dies beruht offensichtlich darauf, daß das während der Mahltrocknung aus den Cellulosepartikeln verdampfende Wasser die beim Zerkleinern der Teilchen entstehende Wärme zumindest zum Teil abführt.

Die Wirksamkeit solcherart herstellbarer erfindungsgemäßer Cellulosepartikel übertrifft dabei die von mittels Naßmahlung zerkleinerten kationische und/oder anionische Gruppen aufweisenden Cellulosepartikeln, welche nicht die erfindungsgemäßen Eigenschaften aufweisen.

Eine bevorzugte Ausführungsform des erfindungsgemäßen Verfahrens ist dadurch gekennzeichnet, daß der Feuchtigkeitsgehalt der Partikel während der Mahltrocknung auf weniger als 20 %, vorzugsweise 10 % bis 15 % eingestellt wird. Die Cellulosepartikel liegen damit in im wesentlichen trockener Form vor und können somit mit weniger Aufwand transportiert werden als durch Naßmahlung zerkleinerte feuchte Cellulosepartikel.

Beim erfindungsgemäßen Verfahren erweist es sich als besonders vorteilhaft, wenn die Mahltrocknung bei Temperaturen von weniger als 60°C, vorzugsweise 20°C bis 40°C durchgeführt wird. Bei diesen Temperaturen ist eine effiziente Mahlung der Cellulosepartikel unter gleichzeitig schonenden Trocknungsbedingungen möglich.

Eine weitere bevorzugte Ausführungsform der vorliegenden Erfindung ist dadurch gekennzeichnet, daß die Mahltrocknung in einer Vorrichtung, welche gleichzeitig als Prallmühle und Strahlmühle wirkt, durchgeführt wird.

Diese für das erfindungsgemäße Verfahren bevorzugten Vorrichtungen benutzen gleichzeitig das Prinzip einer Prallmühle, d.h. daß die Teilchen durch ein z.B. rotierendes Mahlwerkzeug entweder aneinander oder an das Mahlwerkzeug oder die Innenfläche der Mahlvorrichtung prallen. Gleichzeitig wird aber in diesen Vorrichtungen wie in einer Strahlmühle ein Treibmittel, z.B. Luft eingeblasen, wodurch die Teilchen weiter verwirbelt werden und aneinander prallen.

Durch die eingeblasene Luft werden die Teilchen während der Zerkleinerung gleichzeitig getrocknet. Dieser Effekt läßt sich weiter steigern, wenn die eingebrachte Luft beheizt ist.

Solche Vorrichtungen sind z.B. unter dem Namen "Micro-Wirbelmühle" von der Fa. Mahltechnik Görgens GmbH erhältlich.

Gegenstand der Erfindung ist daher auch die Verwendung einer Vorrichtung, welche gleichzeitig als Prallmühle und Strahlmühle wirkt, zur Mahltrocknung von kationische und/oder anionische Gruppen enthaltenden feuchten Cellulosepartikeln.

Eine weitere vorteilhafte Ausgestaltung der vorliegenden Erfindung ist dadurch gekennzeichnet, daß der Feuchtigkeitsgehalt der Partikel während der Mahltrocknung auf weniger als 30 Masse-% reduziert wird und die Partikel solange gemahlen werden, bis sie eine durchschnittliche Partikelgröße von weniger als 300 µm aufweisen.

In diesem Zusammenhang erweist es sich als besonders vorteilhaft, daß die Partikel solange gemahlen werden, bis 90 Masse-% der Partikel um weniger als 60 µm von der durchschnittlichen Partikelgröße abweichen.

Weitere bevorzugte Ausführungsformen des erfindungsgemäßen Verfahrens sind dadurch gekennzeichnet, daß die Partikel solange gemahlen werden, bis sie eine durchschnittliche Partikelgröße von weniger als 100 µm, vorzugsweise 50 µm bis 100 µm, aufweisen und bis 90 Masse-% der Partikel in ihrer Partikelgröße um weniger als 30 µm von der durchschnittlichen Partikelgröße abweichen.

In besonders vorteilhafter Weise ist das erfindungsgemäße Verfahren dahingehend ausgestaltet, daß die Viskose mit einem kationischen Polymer, welches quartäre Ammoniumgruppen enthält, versetzt wird.

Eine weitere bevorzugte Ausführungsform des erfindungsgemäßen Verfahrens besteht darin, daß die Cellulosepartikel vor der Mahltrocknung in Fibridform vorliegen.

Eine Fibridform kann z.B. dadurch erreicht werden, daß zum Ausfällen der Viskose die Viskose durch eine Spinndüse in ein Fällbad extrudiert wird und die frisch extrudierten Filamente unmittelbar nach dem Austritt aus der Spinndüse vorzugsweise durch ein Rührwerk zu Fibriden zerkleinert werden.

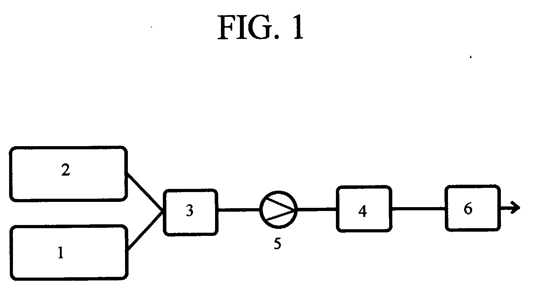

Im folgenden wird die vorliegende Erfindung durch Beispiele und die Figur 1 naher erläutert, wobei Figur 1 schematisch den allgemeinen Ablauf des Verfahrens zur Herstellung von kationische und/oder anionische Gruppen aufweisenden Cellulosepartikeln zeigt.

Das kationische oder anionische Polymer (in Form einer Suspension oder Lösung) wird aus dem Votratsbehälter (1) der aus dem Vorratsbehälter (2) kommenden Celluloselösung (Viskose) zugesetzt. Das entstandene Gemisch wird in die unmittelbar anschließende Mischvorrichtung (3) gepumpt. In der Mischvorrichtung wird der eintretende Strom der Mischkomponenten sofort in mehrere Teilströme aufgeteilt und somit homogen vermischt.

Zur homogenen Mischung besonders geeignet ist dabei eine Mischvorrichtung mit einem Einlaß für das zu mischende Gemenge, einem Auslaß für das gemischte Gemenge, parallel zueinander angeordneten scheibenförmig ausgebildeten Stator- und Rotorelementen, auf der Oberfläche der Stator- bzw. der Rotorscheibe angebrachten Elementen, welche als Rührwerkzeuge und Strombrecher dienen und Durchtrittsöffnungen für den Durchtritt des zu mischenden Gemenges. Vorzugsweise sind die auf der Oberfläche der Stator- bzw. der Rotorscheibe angebrachten Elemente zylinderförmige, senkrecht auf die Oberfläche der Stator- bzw. Rotorscheibe angeordnete Stifte. Die in das Gemisch gleichmäßig eingetragene Mischenergie beträgt 4 kJ/kg bis 20 kJ/kg Gemisch, vorzugsweise 8 kJ/kg bis 12 kJ/kg Gemisch.

Die homogene Mischung wird zu einer Fällvorrichtung (4) transportiert, in der die Mischung mit einem Nichtlösungsmittel für die Cellulosepartikel in Kontakt gebracht wird und diese somit ausgefällt werden. Der für den Transport der Mischung in die Fällvorrichtung nötige Druck kann, falls erforderlich, mittels einer Zahnradpumpe (5) erzielt werden (abhängig von der Viskosität). Nach der Wäsche (6) werden die erhaltenen Cellulosepartikel auf einen Feuchtigkeitsgehalt von 75 Masse-% bis 90 Masse-% abgepreßt und können in die für den jeweiligen Einsatzzweck geeignete Form übergeführt werden.

### Ausführungsbeispiele:

Eine Standardviskose wurde mit einer 17%-igen wäßrigen Lösung von Poly-diallyl-dimethyl-ammoniumchlorid (Poly-DADMAC) in einer Menge von 20 Masse-% Poly-DADMAC bezogen auf Cellulose versetzt.

Das Gemenge wurde unmittelbar danach in einer Mischvorrichtung mit Rotor und Stator wie oben beschrieben bei einer Drehzahl des Rotors von ca. 800 U/min vermischt. Dabei wurde eine Mischenergie von 8,2 kJ/kg Gemisch gleichmäßig eingetragen.

Die erhaltene homogene Spinnmasse wurde über eine Spinndüse (650 Spinnlöcher mit einem Lochdurchmesser von 500 µm) in ein in einem Behälter befindliches wäßriges Fällbad mit 20 g/l H₂SO₄ extrudiert und unmittelbar nach Austritt aus der Spinndüse im Fällbad mit einem Rührwerk (Fa. Fluid-Ekato, Type RD.35 12 A) verwirbelt, welches einen Abstand von 30 mm zur Spinndüse aufwies, sodaß Fibride mit einer Länge von ca. 5-10 mm erhalten wurden. Die erhaltene Suspension von fibridförmigen Cellulosepartikeln wurde am oberen Ende des Behälters abgezogen. Die Cellulosepartikel wurden zur Vervollständigung der Regeneration der Cellulose und zum Auswaschen mit Wasser gewaschen und auf eine Feuchte von ca. 80 Masse-% abgepreßt.

Diese Cellulosepartikel wurden auf unterschiedliche Art und Weise zerkleinert:

### Beispiel 1 (Vergleich):

Die feuchten, kationische Gruppen aufweisenden Cellulosepartikel wurden unter folgenden Bedingungen einer Naßmahlung unterzogen:
- Apparatur:: Scheibenrefiner (Fa. Andritz)
- Stoffdichte:: 3,5 Massen %
- Ansatzgröße:: 1000 l
- Scheibenumdrehungen: 3000 U/min
- Durchsatz:: 150 l/min
- Verbrauchte Energie: 55 kWh/t Feststoff

Die Teilchen wurden 4mal aufeinanderfolgend bei jeweils geringer werdenden Spaltabständen (5 mm, 3 mm, 2 mm, ca. 0,2 mm) für jeweils 20 Minuten durch den Refiner gepumpt und gemahlen.

Die solcherart gemahlenen Cellulosepartikel wiesen eine durchschnittliche Partikelgröße von 200 µm auf Die Teilchen wiesen eine sehr weite Streuung in der Partikelgröße auf. So wiesen 20 % der Partikel eine Partikelgröße von über 1000 µm auf. Die Feuchte der Cellulosepartikel betrug nach wie vor 96,5 Masse-%.

### Beispiel 2 (erfindungsgemäß):

Die feuchten Cellulosepartikel (80%) wurden einer Mahltrocknung unterzogen. Dazu wurden die Cellulosepartikel in einer Micro-Wirbelmühle (Fa. Mahltechnik Görgens GmbH, Typ G 90) bei einer Umfangsgeschwindigkeit des Rührwerkzeugs von 70 m/s in einem Luftstrom mit 40°C ca. 3-5 s gemahlen.

Die erhaltenen Cellulosepartikel wiesen eine durchschnittliche Partikelgröße von 35 µm auf, wobei nur 1 % der Teilchen in der Partikelgröße um mehr als 30 µm von dieser durchschnittlichen Partikelgröße abwichen. Die Feuchte der erhaltenen Cellulosepartikel betrug 10 Masse-%.

### Beispiel 3 (erfindungsgemäß):

Die Mahltrocknung der Cellulosepartikel wurde wie in Beispiel 2 durchgeführt, mit dem Unterschied, daß die Temperatur des Luftstromes 60°C betrug.

Die erhaltenen Cellulosepartikel unterschieden sich von den Cellulosepartikeln des Beispiels 2 dadurch, daß die Feuchte 3 Masse-% betrug und die Partikel eine durchschnittliche Korngröße von 56µm aufwiesen.

Die gemäß Beispiel 1 bis 3 erhaltenen Cellulosepartikel wurden einem Schlammflockungstest unterzogen. Dazu wurden 250 ml biologischer Klärschlamm aus einer Abwasserreinigungsanlage zunächst mit 6,25 ml einer 0,1%igen Lösung eines handelsüblichen Flockungsmittels (Polyacrylamid Marke "Praestol", Hersteller: Fa. Stockhausen) und anschließend mit 6,25 ml 0,01%iger Lösung der jeweiligen kationischen Cellulosepartikel (Beispiel 1 bis 3) versetzt.

Die Mischung wurde 3 s mit einem Magnetrührer aufgerührt und über einen Faltenfilter filtriert. Nach 15, 30, 45, 60, 120, 180, 240 und 300 s wird jeweils die Menge Filtrat festgehalten. Eine erhöhte Filtratmenge bedeutet dabei eine verbesserte Flockungs- bzw. Entwässerungswirkung.

Es wird der durchschnittliche Wert von jeweils fünf Versuchen ermittelt. Die Ergebnisse der Versuche werden jeweils als die prozentuelle Verbesserung im Vergleich zu einem am gleichen Klärschlamm unmittelbar zuvor nur mit handelsüblichem Flockungsmittel (ohne kationische Cellulosepartikel) durchgeführten Versuch angegeben.

### Ergebnis:

Verbesserung (%) gegenüber Versuch ohne kationische Cellulosepartikel

| Zeit (s) | Beispiel 1 (Vergleich) | Beispiel 2 | Beispiel 3 |
|---|---|---|---|
| 15 | 11 | 10 | 10 |
| 30 | 19 | 19 | 17 |
| 45 | 23 | 24 | 23 |
| 60 | 26 | 29 | 25 |
| 120 | 29 | 33 | 30 |
| 180 | 27 | 32 | 29 |
| 240 | 24 | 29 | 26 |
| 300 | 21 | 27 | 25 |

Aus der Tabelle wird deutlich, daß die erfindungsgemäßen Cellulosepartikel (Beispiel 2 bzw. 3) im Vergleich zu naßgemahlenen nicht erfindungsgemäßen Partikeln eine erhöhte Entwässerungswirkung zeigen. Diese Entwässerungswirkung ist bei den Cellulosepartikeln gemäß Beispiel 2 (durchschnittliche Partikelgröße 35 µm) noch stärker ausgeprägt als bei den Partikeln gemäß Beispiel 3. Allerdings ist bei der geringeren Partikelgröße die Bildung von Staub erhöht, weshalb die Partikel des Beispiels 3 aufgrund ihrer einerseits guten Wirkung, aber andererseits auch guten Handhabbarkeit bevorzugt sind.

Es zeigt sich, daß die erfindungsgemäßen Cellulosepartikel (Beispiel 2 bzw. 3) im Vergleich zu naßgemahlenen nicht erfindungsgemäßen Partikeln eine verbesserte Handhabbarkeit aufgrund des praktisch trockenen Zustandes, welcher einen Transport der Partikel erleichtert, aufweisen. Weiters wurden aufgrund der engen Partikelgrößenverteilung der erfindungsgemäßen Cellulosepartikel im Unterschied zu den naßgemahlenen Cellulosepartikel beim Einsatz in diversen Anwendungen praktisch keine Staubentwicklung und keine Klassierungseffekte auch beim Vermischen mit anderen Substanzen festgestellt. Das beste Verhalten in bezug auf Staubentwicklung und Klassierungseffekte zeigten dabei die erfindungsgemäßen Cellulosepartikel gemäß Beispiel 3.

## Patentansprüche

1. Cellulosepartikel, welche über den gesamten Querschnitt verteilte kationische und/oder anionische Gruppen enthalten, dadurch gekennzeichnet, daß
die Partikel einen Feuchtigkeitsgehalt von weniger als 30 Masse-%, vorzugsweise weniger als 20 Masse-% aufweisen,
die Partikel eine durchschnittliche Partikelgröße von weniger als 300 µm aufweisen und daß zumindest 90 Masse-% der Partikel in ihrer Partikelgröße um weniger als 60 µm von der durchschnittlichen Partikelgröße abweichen.

2. Cellulosepartikel nach Anspruch 1, dadurch gekennzeichnet, daß die Partikel eine durchschnittliche Partikelgröße von bis zu 100 µm, vorzugsweise 50 µm bis 100 µm aufweisen.

3. Cellulosepartikel nach Anspruch 2, dadurch gekennzeichnet, daß 90 Masse-% der Partikel in ihrer Partikelgröße um weniger als 30 µm von der durchschnittlichen Partikelgröße abweichen.

4. Cellulosepartikel nach einem der Ansprüche 1 bis 3, dadurch gekennzeichnet, daß die kationischen Gruppen quartäre Ammoniumgruppen sind.

5. Verfahren zur Herstellung der Cellulosepartikel nach einem der Ansprüche 1 bis 4, enthaltend die Schritte:
• Versetzen und Vermischen einer Viskose mit einem kationischen und/oder anionischen Polymer
• Ausfällen der Viskose in einem oder mehreren wäßrigen Fäll- bzw. Regenerationsbädern
• Auswaschen der ausgefällten, regenerierten, kationische und/oder anionische Gruppen aufweisenden Cellulosepartikel
dadurch gekennzeichnet, daß die mit einem Feuchtigkeitsgehalt von 75 Masse-% bis 90 Masse-% vorliegenden ausgewaschenen Cellulosepartikel einer Mahltrocknung unterworfen werden.

6. Verfahren nach Anspruch 5, dadurch gekennzeichnet, daß der Feuchtigkeitsgehalt der Partikel während der Mahltrocknung auf weniger als 20 %, vorzugsweise 10 % bis 15 % reduziert wird.

7. Verfahren nach einem der Ansprüche 5 oder 6, dadurch gekennzeichnet, daß die Mahltrocknung bei Temperaturen von weniger als 60°C, vorzugsweise 20°C bis 40°C durchgeführt wird.

8. Verfahren nach einem der Ansprüche 5 bis 7, dadurch gekennzeichnet, daß die Mahltrocknung in einer Vorrichtung, welche gleichzeitig als Prallmühle und Strahlmühle wirkt, durchgeführt wird.

9. Verfahren nach einem der Ansprüche 5 bis 8, dadurch gekennzeichnet, daß die Cellulosepartikel vor der Mahltrocknung in Fibridform vorliegen.

10. Verwendung einer Vorrichtung, welche gleichzeitig als Prallmühlue und Strahlmühle wirkt, zur Mahltrocknung von kationische und/oder anionische Gruppen enthaltenden feuchten Cellulosepartikeln.
